(19) Europäisches Patentamt
European Patent Office
Office européen des brevets

(11) EP 4 079 812 B1

(12) EUROPEAN PATENT SPECIFICATION

(45) Date of publication and mention
of the grant of the patent:
21.08.2024 Bulletin 2024/34

(51) International Patent Classification (IPC):
B29B 7/88 (2006.01)        B29B 7/90 (2006.01)
B29B 7/72 (2006.01)        B29B 9/14 (2006.01)
B29C 70/06 (2006.01)       C08J 5/04 (2006.01)
C08J 5/06 (2006.01)        C08K 5/134 (2006.01)
C08K 5/372 (2006.01)       C08K 5/523 (2006.01)
C08K 7/06 (2006.01)        C08K 7/14 (2006.01)
C08K 9/08 (2006.01)        B29B 7/48 (2006.01)
B29B 9/06 (2006.01)        C08K 3/04 (2006.01)

(21) Application number: 20902569.1

(22) Date of filing: 09.11.2020

(52) Cooperative Patent Classification (CPC):
(C-Sets available)
B29B 7/90; B29B 7/726; B29B 7/88; B29B 9/14;
B29C 70/06; C08J 5/042; C08J 5/06; C08K 5/134;
C08K 5/1345; C08K 5/372; C08K 5/523;
C08K 7/06; C08K 7/14; C08K 9/08; B29B 7/48;

(Cont.)

(86) International application number:
PCT/JP2020/041724

(87) International publication number:
WO 2021/124726 (24.06.2021 Gazette 2021/25)

(54) **FIBER-REINFORCED RESIN MOLDING MATERIAL, FIBER-REINFORCED RESIN MOLDED ARTICLE, AND METHOD FOR MANUFACTURING FIBER-REINFORCED RESIN MOLDED ARTICLE**

FASERVERSTÄRKTES HARZFORMMATERIAL, FASERVERSTÄRKTES HARZFORMTEIL UND VERFAHREN ZUR HERSTELLUNG EINES FASERVERSTÄRKTEN HARZFORMTEILS

MATÉRIAU DE MOULAGE EN RÉSINE RENFORCÉ DE FIBRES, ARTICLE MOULÉ EN RÉSINE RENFORCÉ DE FIBRES ET PROCÉDÉ DE FABRICATION D'UN ARTICLE MOULÉ EN RÉSINE RENFORCÉ DE FIBRES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 20.12.2019 JP 2019230008

(43) Date of publication of application:
26.10.2022 Bulletin 2022/43

(73) Proprietor: Toray Industries, Inc.
Tokyo 103-8666 (JP)

(72) Inventors:
• YOSHIHIRO, Kazuki
Nagoya-shi, Aichi 455-8502 (JP)
• HIRATA, Shin
Nagoya-shi, Aichi 455-8502 (JP)
• HAMAGUCHI, Mitsushige
Nagoya-shi, Aichi 455-8502 (JP)

(74) Representative: Mewburn Ellis LLP
Aurora Building
Counterslip
Bristol BS1 6BX (GB)

(56) References cited:
WO-A1-2016/051562    JP-A- 2012 056 232

**JP-A- 2013 011 050**    **JP-A- 2013 011 050**
**JP-A- 2013 166 922**    **JP-A- 2013 209 629**
**JP-A- 2014 159 560**    **JP-A- 2015 143 328**
**JP-A- 2017 114 107**    **JP-A- 2017 114 107**
**JP-A- 2018 059 087**    **JP-A- H10 168 227**

(52) Cooperative Patent Classification (CPC): (Cont.)
B29B 9/06; C08J 2369/00; C08J 2463/00;
C08K 3/04

C-Sets
**C08K 5/1345, C08L 69/00;**
**C08K 5/372, C08L 69/00;**
**C08K 5/523, C08L 69/00;**
**C08K 7/06, C08L 69/00;**
**C08K 7/14, C08L 69/00**

**Description**

Technical Field of the Invention

The present invention relates to a fiber-reinforced resin molding material, a fiber-reinforced resin molded article, and a method for manufacturing a fiber-reinforced resin molded article, and more specifically, relates to a fiber-reinforced resin molding material exhibiting excellent flame retardancy and molded article appearance, a molded article using the molding material, and a method for manufacturing the molded article.

Background Art of the Invention

Molded articles comprising reinforcement fibers and a thermoplastic resin are widely used for sports goods applications, aerospace applications and general industrial applications because they are lightweight and have excellent mechanical properties. The reinforcement fibers used in these molded articles reinforce the molded articles in various forms depending on the intended use. For these reinforcement fibers, metal fibers such as aluminum fibers and stainless fibers, organic fibers such as aramid fibers and PBO (polyphenylene benzoxazole) fibers, inorganic fibers such as carbon fibers, glass fibers and silicon carbide fibers, etc. are used.

Further, as a molding material for obtaining such a molded article (concretely, a molding material using a continuous reinforcement fiber and a thermoplastic resin as a matrix), a wide variety of forms such as thermoplastic prepregs, yarns and glass mats (GMT) are known. Such a molding material has characteristics that utilizing the features of the thermoplastic resin, molding is facilitated, a load for storage such as one in case of a thermosetting resin is not required, a toughness of an obtained molded article is high, and recyclability is excellent. In particular, the molding material processed into pellets can be applied to molding methods excellent in economic efficiency and productivity such as injection molding and stamping molding, and is useful as an industrial material.

In applications such as electronic device housings, further weight reduction and thinning are required, and high mechanical properties, flame retardance and molded article appearance are required for molded articles manufactured from molding materials.

As a flame retardant, a masterbatch using a phosphazene flame retardant that does not contain a halogen atom has been proposed in consideration of environmental aspects and safety (refer to Patent documents 1 and 2). Further, a short fiber-reinforced resin molding material compounding with a phosphorus-based flame retardant that do not contain a halogen atom and a reinforcement fiber in order to achieve both flame retardance and mechanical properties is described (refer to Patent document 3). In addition, a molding material excellent in flame retardance and mechanical properties has been proposed wherein a resin impregnated reinforcement fiber, which is made by melt-impregnating a bundle of reinforcement fibers with an epoxy resin, is coated with a polycarbonate resin containing a specific amount of a flame retardant and/or a liquid crystal resin (refer to Patent document 4). Patent document 5 discloses a fiber-reinforced thermoplastic resin molded product. Patent document 6 discloses a molding material. Patent document 7 discloses a composite reinforcement fiber bundle, a molding material, and a method for producing the composite reinforcement fiber bundle. Patent document 8 discloses a fiber-reinforced plastic molded body.

Prior art documents

Patent documents

Patent document 1: JP-A-2006-307178; Patent document 2: JP-A-2008-101035; Patent document 3: WO 2014/148641; Patent document 4: JP-A-2013-209629; Patent document 5: JP 2018-059087 A; Patent document 6: JP 2013-166922 A; Patent document 7: JP 2013-011050 A; Patent document 8: JP 2017-114107 A

Summary of the Invention

Problems to be solved by the Invention

As shown hereinabove, fiber-reinforced resin molding materials using flame retardants have been proposed conventionally. However, accompanying with improvement of the required level of thinning of products, higher level mechanical properties and flame retardance are required. Further, subject matters that have not been a problem have become apparent. For example, in order to achieve a high level of flame retardance, it is necessary to add a large amount of flame retardant, but the flame retardant, which is a low molecular weight compound, is more easily decomposed than the thermoplastic resin, which is a high molecular weight compound, and causes molded article appearance defects such as burn marks at the welded part and the end of the molded article due to the generated gas. For this reason, in a molded article using the conventional molding material as described above, a problem, that a molded article that sufficiently satisfies the flame retardance, the mechanical properties, and the molded article appearance cannot be obtained, has occurred.

For example, in Patent documents 1 and 2, the flame retardance of the resin composition could not be effectively exhibited because the polyester resin such as the polyethylene terephthalate resin, the polyester elastomer or the phenolic resin component contained in the flame retardant masterbatch lowered the flame retardance. Further, in the technologies described in Patent documents 1 to 3, since the reinforcement fiber in the resin molding material is a short fiber and the fiber length is small, the mechanical properties of the molded article could not be effectively exhibited. In Patent document 4, although a resin composition compounding with a large amount of flame retardant is used, there is no description with respect to improvement of molded article appearance.

Under such circumstances, it has been required to develop a fiber-reinforced resin molding material making a molded article exhibit excellent flame retardance and mechanical properties and have a good appearance, and a molded article thereof.

In view of the problems of the prior art, an object of the present invention is to provide a fiber-reinforced resin molding material capable of manufacturing a molded article exhibiting a flame retardance and mechanical properties and having an excellent appearance, a molded article using the molding material, and a method for manufacturing the molded article.

Means for solving the Problems

As a result of diligent investigation, the present inventors have invented the following fiber-reinforced resin molding material, a molded article using the molding material, and a manufacturing method thereof, which can solve the above-described problems.

A fiber-reinforced resin molding material according to the present invention is a molding material containing at least the following components (A) to (C), and is characterized in that the fiber-reinforced resin molding material has a weight loss on heating, when being heated at 300°C for 10 minutes either in a nitrogen atmosphere or in an air atmosphere, of 1.5% or less, and an antioxidant (D) is added at 1.0% by weight or more.

(A) an amorphous thermoplastic resin: 100 parts by weight
(B) a reinforcement fiber: 4 to 60 parts by weight
(C) a phosphorus-based flame retardant: 20 to 60 parts by weight

Further, a fiber-reinforced resin molded article according to the present invention is a molded article manufactured by using the fiber-reinforced resin molding material as described above.

Furthermore, a method for manufacturing a fiber-reinforced resin molded article according to the present invention is a method for manufacturing a fiber-reinforced resin molded article using the fiber-reinforced resin molding material as described above, and is a method comprising a step of drying the fiber-reinforced resin molding material at a temperature in a range of a glass transition temperature of the fiber-reinforced resin molding material to the glass transition temperature + 20°C before molding.

Effect according to the Invention

By using the fiber-reinforced resin molding material according to the present invention, a molded article having excellent flame retardancy and mechanical properties while having a good product appearance in which burn marks during molding are suppressed can be obtained. The molded article molded by using the molding material according to the present invention is extremely useful for various parts/members such as parts, internal members and housings of electric/electronic equipment, OA equipment, home electric appliances, or automobiles.

Brief explanation of the drawings

[Fig. 1] Fig. 1 is a schematic cross-sectional view of a fiber-reinforced resin molding material according to an embodiment of the present invention in a direction perpendicular to a fiber axis or a pellet axis.

[Fig. 2] Fig. 2 is a schematic cross-sectional view of a fiber-reinforced resin molding material according to another embodiment of the present invention in a direction perpendicular to a fiber axis or a pellet axis.

[Fig. 3] Fig. 3 is a schematic sectional view of a fiber-reinforced resin molding material according to an embodiment of the present invention in a direction parallel to a fiber axis or a pellet axis.

[Fig. 4] Fig. 4 is a schematic cross-sectional view showing an example of a cross-sectional form of a composite fiber bundle composed of (B) reinforcement fibers and (E) a resin in the present invention in a direction perpendicular to the fiber axis.

Embodiments for carrying out the Invention

Hereinafter, the present invention will be explained in detail together with embodiments. The fiber-reinforced resin molding material of the present invention (hereinafter, may be referred to simply as "molding material") is a molding material that satisfies the following requirements. Where, in the present invention, the molding material means a raw material used when molding a molded article by injection molding or the like.

The molding material of the present invention is a molding material containing at least the following components (A) to (C), and is characterized in that the fiber-reinforced resin molding material has a weight loss on heating, when being heated at 300°C for 10 minutes either in a nitrogen atmosphere or in an air atmosphere, of 1.5% or less, and an antioxidant (D) is added at 1.0% by weight or more.

(A) an amorphous thermoplastic resin: 100 parts by weight
(B) a reinforcement fiber: 4 to 60 parts by weight
(C) a phosphorus-based flame retardant: 20 to 60 parts by weight

At the time of molding, a part of a heated molding material causes thermal decomposition and hydrolysis to generate decomposition gas. The generated decomposition gas is compressed at the time of pressurization during molding, and causes a local temperature rise at the end of the molded article, the welded portion, and the like. At this time, oxidative decomposition of the overheated molding material is accelerated, and an appearance defect of the molded article accompanied with discoloration called burn marks occurs.

The present inventors have found that the amount of gas generated from the molded material melted during molding is reduced by controlling the weight loss on heating of the molding material in a nitrogen atmosphere at a certain level or less. Further, it has been also found that by controlling the weight loss on heating in an air atmosphere at a certain level or less, the oxidative decomposition of the components during molding pressurization is suppressed. Furthermore, it has been found that the effect of suppressing burn marks during molding is dramatically improved by using a molding material in which both weight losses on heating in nitrogen and air atmospheres are a certain level or less, and the present invention has been reached.

First, each of the above-described components will be explained.

<(A) Amorphous thermoplastic resin>

The molding material in the present invention contains (A) an amorphous thermoplastic resin. The amorphous thermoplastic resin means a thermoplastic resin that does not positively form a crystalline state among thermoplastic resins. More concretely, a thermoplastic resin having a good molecular tacticity, a small side chain, no branching, and a large intermolecular cohesive force becomes a crystalline resin, but an amorphous thermoplastic resin means a resin that does not have a part or all of the above-described items. In general, an amorphous thermoplastic resin has better compatibility with a flame retardant as compared with a crystalline thermoplastic resin, so flame retardance and flowability are improved.

It is preferred that the glass transition temperature of the amorphous thermoplastic resin (A) itself is 100°C or higher and 250°C or lower. If the glass transition temperature is 100°C or higher, because the heat resistance is excellent and the gas generated by resin decomposition can be suppressed, such a condition is preferable. It is more preferably 120°C or higher. If the glass transition temperature is 250°C or lower, because the flowability during molding is excellent, such a condition is preferable. It is more preferably 200°C or lower, and further preferably 150°C or lower. Here, the glass transition temperature indicates a value measured by DSC at a temperature elevation rate of 20 °C/min according to JIS K7121.

Although the amorphous thermoplastic resin (A) is not particularly restricted, it is preferred that the resin is at least one or more selected from the group consisting of a polyarylate-based resin, a polysulfone-based resin, a polyethersulfone-based resin, a polyimide-based resin, a polyetherimide-based resin, an acrylic-based resin, a methacrylic-based resin, a styrene-based resin, a vinyl-based resin, a polyphenylene ether-based resin, and a polycarbonate-based resin. These amorphous thermoplastic resins also have the advantage of high flexibility and good compatibility with a flame retardant. It is particularly preferable to contain a polycarbonate resin from the viewpoint of compatibility with a flame retardant.

A polycarbonate resin is a resin excellent in mechanical properties, thermal stability and flame retardance with a good balance, because the reinforcing effect due to the reinforcement fiber and the flame retardance improving effect due to the flame retardant and/or the liquid crystal resin work more effectively, it is preferably used. In the present invention, the polycarbonate resin is a polymer having a carbonic ester structure in the main chain, and an aliphatic polycarbonate, an aliphatic-aromatic polycarbonate, an aromatic polycarbonate, etc. can be exemplified. These may be used alone or in combination of two or more. In particular, from the viewpoint of excellent impact resistance, an aromatic polycarbonate having a carbonic ester structure of 4,4'-dihydroxydiphenyl-2,2-propane (bisphenol A) is particularly preferably used.

Further, the viscosity average molecular weight (Mv) of the polycarbonate resin is preferably 10,000 to 50,000, more preferably 15,000 to 40,000, and further preferably 18,000 to 35,000. If the viscosity average molecular weight (Mv) is 10,000 or more, because it is more excellent in mechanical properties such as impact resistance, such a condition is preferred. Further, if the viscosity average molecular weight (Mv) is 50,000 or less, because the flowability at the time of molding is excellent and the moldability is high, such a condition is preferred.

Here, the viscosity average molecular weight (Mv) can be determined by the following method. First, the specific viscosity ($\eta_{SP}$) calculated by the following equation is determined using an Ostwald viscometer at 20°C, with respect to a solution prepared by dissolving 0.7g of a polycarbonate resin in 100 ml of methylene chloride at 20°C.

$$\text{Specific viscosity } (\eta_{SP}) = (t-t_0) / t_0$$

[$t_0$ is the number of seconds for methylene chloride to drop, and t is the number of seconds for the sample solution to drop.]

Subsequently, the viscosity average molecular weight Mv can be calculated from the determined specific viscosity ($\eta_{SP}$) by the following equation.

$$\eta_{SP} / c = [\eta] + 0.45 \times [\eta]^2 c$$

(where, [$\eta$] is the limit viscosity)

$$[\eta] = 1.23 \times 10^{-4} Mv^{0.83}$$

$$c = 0.7$$

The method for obtaining the polycarbonate resin is not particularly limited, and a known production method can be used, and for example, a phosgene method, a transesterification method, and a solid phase polymerization method are exemplified. Further, "Iupilon" and "Novarex" (trade names) supplied by Mitsubishi Engineering Plastics Co., Ltd., "Panlite" (trade name) supplied by Teijin Chemicals Ltd., and "Tarflon" (trade name) supplied by Idemitsu Petrochemical Co., Ltd., etc., which are on the market, can be also obtained and used.

<(B) Reinforcement fiber>

The reinforcement fiber (B) in the present invention can improve the mechanical properties by the fiber reinforcing effect relative to the amorphous thermoplastic resin (A). Further, in case where the reinforcement fiber has peculiar properties such as conductivity and thermal conductivity, it is possible to impart those properties that cannot be achieved by the amorphous thermoplastic resin (A) alone. From this point of view, among the reinforcement fibers, carbon fibers such as PAN (polyacrylic nitrile)-based, pitch-based and rayon-based are preferable from the viewpoint of the effect of further improving the mechanical properties and reducing the weight of the molded article, and the PAN-based carbon fibers are further preferable from the viewpoint of the balance between the strength and the elastic modulus of the obtained molded article. Further, glass fibers are also preferably used for the purpose of balancing flame retardance and mechanical properties.

The content of reinforcement fiber (B) in the molding material of the present invention is 4 to 60 parts by weight (4 parts by weight or more and 60 parts by weight or less) with respect to 100 parts by weight of amorphous thermoplastic resin (A). If the content of the reinforcement fiber is less than 4 parts by weight, it is difficult to exhibit mechanical properties such as bending strength of the molded article. In addition, since the amount of gas generated increases, the probability that burn marks will occur increases. The content of the reinforcement fiber is more preferably 10 parts by weight or more, and further preferably 20 parts by weight or more. On the other hand, if the content of the reinforcement fiber exceeds 60 parts by weight, the flowability and flame retardance of the molding material may decrease during the molding processing. The content of the reinforcement fiber is preferably 30 parts by weight or less.

Further, in case where a carbon fiber is used as the reinforcement fiber, the carbon fiber preferably has a surface oxygen ratio [O/C], which is a ratio of the numbers of atoms of oxygen (O) and carbon (C) on the fiber surface measured by X-ray photoelectron spectroscopy, of 0.05 to 0.5, more preferably 0.08 to 0.4, and further preferably 0.15 to 0.3. When the surface oxygen ratio is 0.05 or more, the amount of functional groups on the surface of the carbon fiber can be secured, and stronger adhesion with the thermoplastic resin can be obtained. Further, the upper limit of the surface oxygen ratio is not particularly limited, but it can be exemplified that it is generally 0.5 or less from the viewpoint of the balance between the handleability and productivity of the carbon fiber.

The surface oxygen ratio of carbon fiber is determined by X-ray photoelectron spectroscopy according to the following procedure. First, the carbon fiber bundle from which the sizing agent and the like attached to the surface of the carbon fiber has been removed with a solvent is cut to 20 mm, spread on a copper sample support and arranged, and then, using A1K$\alpha$1 and 2 as the X-ray sources, the inside of the sample chamber is kept at $1 \times 10^{-8}$ Torr. The kinetic energy value (K.E.) of the main peak of C1s is adjusted to 1202 eV as a correction value of the peak due to charging at the time of measurement. The C1s peak area is determined as K.E. by drawing a straight base line in a range of 1191 to 1205 eV. The O1s peak area is determined as K.E. by drawing a straight base line in a range of 947 to 959 eV.

Here, the surface oxygen ratio is calculated as the ratio of the numbers of atoms from the ratio of the above-described O1s peak area and the C1s peak area using the sensitivity correction value peculiar to the apparatus. In case where the model ES-200 supplied by Kokusai Electric Inc. is used as the X-ray photoelectron spectroscopy device, the sensitivity correction value is set at 1.74.

The means for controlling the surface oxygen ratio [O/C] to 0.05 to 0.5 is not particularly limited, but for example, methods such as electrolytic oxidation, chemical oxidation and gas phase oxidation can be employed, and in particular, electrolytic oxidation is preferable.

Further, although the average fiber diameter of the carbon fiber is not particularly limited, it is preferably in a range of 1 to 20 $\mu$m, more preferably in a range of 3 to 15 $\mu$m, from the viewpoint of the mechanical properties and the surface appearance of the obtained molded article.

Further, it is preferred that the reinforcement fiber (B) is provided with a sizing agent because the bundling property, bending resistance and scratch resistance are improved, and the occurrence of fluffs and thread breakage in a higher processing process can be suppressed. Furthermore, it is preferred because the sizing agent interacts with the functional groups or the like on the surface of the carbon fiber, thereby improving the adhesiveness and the mechanical properties of a composite.

The amount of the sizing agent provided is not particularly limited, but is preferably 0.1 to 3 parts by weight or less, more preferably 0.2 to 1.2 parts by weight or less, and further preferably 0.5 to 1 part by weight with respect to 100 parts by weight of the carbon fiber. At 0.1 part by weight or more, the adhesiveness is improved and the mechanical properties of the molded article are improved. At 3 parts by weight or less, the dispersibility of the carbon fibers in the molded article is improved. Further, it is preferable because deterioration of the physical properties of the matrix resin is suppressed.

Further, as the sizing agent, an epoxy resin, a polyethylene glycol, a polyurethane, a polyester, an emulsifier or a surfactant can be exemplified. These may be provided by one kind, or two or more kinds may be provided in combination.

An epoxy resin is preferable as the sizing agent component from the viewpoint of adhesiveness. In case where the epoxy resin is present between the reinforcement fiber and the matrix resin, it is preferable because it achieves a condition flexible and difficult to peel off, so that the strength of the molded article can be easily improved.

As the epoxy resin, exemplified are a bisphenol A type epoxy resin, a bisphenol F type epoxy resin, an aliphatic epoxy resin, a phenol novolac type epoxy resin and the like. In particular, an aliphatic epoxy resin is preferable as the epoxy resin because it easily exhibits adhesiveness with the matrix resin. Usually, when an epoxy resin has a large number of epoxy groups, the crosslinking density after the crosslinking reaction becomes high, so that the structure thereof tends to have low toughness, and even if it is present between the carbon fiber and the matrix resin, because it is brittle, it is easily peeled off, and the strength of the molded article may not be exhibited. On the other hand, since the aliphatic epoxy resin has a flexible skeleton, it tends to have a structure having a high toughness even if the crosslinking density is high, and it is flexible at the interface and difficult to peel off, so that the strength of the molded article is easily improved, which is preferred.

An aliphatic epoxy resin is an epoxy resin that does not contain an aromatic ring in the molecule. An aromatic ring is a cyclic chemical skeleton that has an electron conjugation and exhibits an aromaticity.

As concrete examples of the aliphatic epoxy resin, for example, as diglycidyl ether compounds, exemplified are ethylene glycol diglycidyl ethers and polyethylene glycol diglycidyl ethers, propylene glycol diglycidyl ethers and polypropylene glycol diglycidyl ethers, 1,4-butanediol diglycidyl ether, neopentyl glycol diglycidyl ether, polytetramethylene glycol diglycidyl ether, polyalkylene glycol diglycidyl ethers, etc. Further, as polyglycidyl ether compounds, exemplified are glycerol polyglycidyl ether, diglycerol polyglycidyl ether, polyglycerol polyglycidyl ethers, sorbitol polyglycidyl ethers, arabitol polyglycidyl ethers, trimethylolpropane polyglycidyl ethers, pentaerythritol polyglycidyl ethers, polyglycidyl ethers of aliphatic polyhydric alcohols, etc.

Among the aliphatic epoxy resins, it is preferred to use a polyfunctional aliphatic epoxy resin having three or more functionalities, and further, it is more preferred to use an aliphatic polyglycidyl ether compound having three or more highly reactive glycidyl groups. Among these, glycerol polyglycidyl ether, diglycerol polyglycidyl ether, polyethylene glycol glycidyl ethers, and polypropylene glycol glycidyl ethers are more preferred. The aliphatic polyglycidyl ether compounds are preferred because they have a good balance of flexibility, crosslinking density and compatibility with the matrix resin, and effectively improve the mechanical properties of the molded article.

Although the means for applying the sizing agent is not particularly limited, for example, there are a method of immersing in the sizing liquid via a roller, a method of contacting the roller to which the sizing liquid is attached, a method of atomizing the sizing liquid and spraying the sizing liquid, and the like. Further, any of a batch type and a continuous type may be employed, but a continuous type having good productivity and small variation is preferred. At this time, it is preferred to control the sizing liquid concentration, temperature, thread tension, etc. so that the amount of the sizing agent effective ingredient adhered to the carbon fiber is uniformly adhered within an adequate range. Further, it is more preferred to ultrasonically vibrate the reinforcement fiber when the sizing agent is applied.

As the solvent used for the sizing agent, water, methanol, ethanol, dimethylformamide, dimethylacetamide, acetone and the like are exemplified, but water is preferred because it is easy to handle and from the viewpoint of disaster prevention. Therefore, in case where a compound that is insoluble or sparingly soluble in water is used as a sizing agent, it is preferred to add an emulsifier and a surfactant and disperse it in water. Concretely, as the emulsifiers and surfactants, styrene-maleic anhydride copolymers, olefin-maleic anhydride copolymers, formalin condensates of naphthalene sulfonate, anionic emulsifiers such as sodium polyacrylic acid, cationic emulsifiers such as polyethyleneimine and polyvinyl imidazolin, nonionic emulsifiers such as nonylphenol ethylene oxide adducts, polyvinyl alcohols, polyoxyethylene ether ester copolymers, and sorbitan ester ethyloxide adducts, and the like can be used, but a nonionic emulsifier with a small interaction is preferred because it does not hinder the adhesive effect of the polyfunctional compound.

<(C) Phosphorus-based flame retardant>

The molding material of the present invention contains a phosphorus-based flame retardant. The phosphorus-based flame retardant is highly compatible with the thermoplastic resin, and the mixture thereof exhibits excellent flame retardance and flowability.

Further, it is preferred that the phosphorus-based flame retardant is compatible with amorphous thermoplastic resin (A). The higher the compatibility is, the higher the flame retardance becomes, which is preferred. The compatibility can be confirmed by change of the glass transition temperature of amorphous thermoplastic resin (A). The glass transition temperature of the mixture can be determined according to JIS K7121 with a differential scanning calorimeter (DSC) at a heating rate of 20 °C/min.

The content of phosphorus-based flame retardant (C) in the molding material of the present invention is 20 to 60 parts by weight (20 parts by weight or more and 60 parts by weight or less) with respect to 100 parts by weight of amorphous thermoplastic resin (A). If the content of the phosphorus-based flame retardant is less than 20 parts by weight, the flame retardance and flowability of the molded article are reduced. The content of the phosphorus-based flame retardant is more preferably 40 parts by weight or more. On the other hand, if the content of the phosphorus-based flame retardant exceeds 60 parts by weight, the mechanical properties of the molded article decrease. The content of the phosphorus-based flame retardant is preferably 50 parts by weight or less.

The phosphorus-based flame retardant used in the present invention preferably has a weight loss on heating of 5% or less when heated at 300°C for 10 minutes in a nitrogen atmosphere. If it is 5% or less, the amount of gas generated when the resin is melted in molding is reduced and burn marks can be suppressed, which is preferred.

The phosphorus-based flame retardant used in the present invention (C) is not particularly limited, and known ones can be used. For example, a phosphorus compound-based flame retardant and a red phosphorus-based flame retardant can be exemplified.

As typical examples of the phosphorus compound-based flame retardant, exemplified are triphenyl phosphate, tricresyl phosphate, trimethyl phosphate, triethyl phosphate, cresyl diphenyl phosphate, xylenyl diphenyl phosphate, 2-ethylhexyl diphenyl phosphate, and as others, phosphorus ester-based compounds such as aromatic phosphorus esters, halogen-containing phosphorus ester compounds such as trisdichloropropyl phosphate, trischloroethyl phosphate, trischloropropyl phosphate, and further, condensed phosphorus ester compounds, polyphosphates, red phosphorus-based compounds, etc. These may be used alone or in combination of two or more.

Phosphorus-based flame retardant and red phosphorus-based compounds form a dense char on the surface of the molded article by the dehydration carbonization promoting action, block heat and oxygen, and prevent the propagation of flame. In addition, flame retardance is exhibited by stabilizing active H radicals and OH radicals in the combustion field by the radical trap effect against the radical chain reaction in thermal decomposition.

In the present invention, among the various flame retardants described above, use of a phosphorus compound-based flame retardant is preferred from the viewpoints of exhibiting of flame retardance, presence or absence of concern about generation of toxic gas, increase in specific gravity due to the addition of flame retardant, and compatibility with the amorphous thermoplastic resin (A), and it is particularly preferred to use a condensed phosphate ester compound.

Further, it is preferred that the phosphorus-containing concentration of the phosphorus-based flame retardant is 5 to 50%. The phosphorus-containing concentration means a weight occupied by phosphorus in the weight of the phosphorus-based flame retardant, and if it is 5% or more, a dense char is easily formed and the flame retardance is improved. 7% or more is more preferable, and 9% or more is further preferable. If the phosphorus-containing concentration is 50% or less, because the compatibility with the amorphous thermoplastic resin (A) is improved, the flame retardance is increased, which is preferable.

Further, in the present invention, the phosphorus-based flame retardant (C) may be contained in any of raw materials used as the molding material at the time of molding. Here, in the present invention, when a preferable example contained in any of the raw materials is concretely exemplified, for example, it may be contained in a resin coating the reinforcement fiber as a so-called resin composition in which the amorphous thermoplastic resin and the phosphorus-based flame retardant are melt-kneaded, or it may be pre-impregnated in the reinforcement fiber bundle in the step of obtaining the reinforcement fiber. Further, a molding material mixture prepared by dry-blending reinforcement fibers coated with a thermoplastic resin and a so-called resin composition obtained by melt-kneading a thermoplastic resin and a phosphorus-based flame retardant is also preferred because the amounts of reinforcement fibers and flame retardant to be contained in a molded article can be easily adjusted before molding. Here, in the present invention, the dry-blending means that, differently from melt kneading, two kinds of materials are stirred and mixed at a temperature at which the resin components do not melt to obtain a substantially uniform state, and it is preferably used mainly in case where a pellet-shaped material is used for injection molding, extrusion molding or the like.

<As to (D) antioxidant>

The molding material of the present invention contains an antioxidant (D). As the antioxidant, it is preferred to use antioxidants such as hindered phenol-based, hydroquinone-based, phosphorus-based, phosphite-based, amine-based, and sulfur-based ones and substitutes thereof.

As concrete examples thereof, as the above-described phosphorus-based and phosphite-based antioxidants, for example, tetrakis(2,4-di-t-butylphenyl)-4,4'-biphenylene phosphonite, bis(2,6-di-t-butyl-4-methylphenyl) pentaerythritol-diphosphite, 2,2-methylene bis(4,6-di-t-butylphenyl) octyl phosphite, triphenyl phosphite, tris(2,4-di-t-butylphenyl) phosphite, diphenyl isodecyl phosphite, phenyl diisodecyl phosphite, 4,4-butlylidene-bis(3-methyl-6-t-butylphenyl-di-tridecyl) phosphite, cyclic neopentane tetryl bis(octadecyl phosphite), cyclic neopentane tetryl bis(2,6-di-t-butyl-4-methylphenyl) phosphite, tris(nonyl-phenyl) phosphite, diisodecyl pentaerythritol diphosphite, 9,10-dihydro-9-oxa-10-phosphaphenanthrene-10-oxide, 10- (3,5-di-t-butyl-4-hydroxybenzyl)-9,10-dihydro-9-oxa-10-phosphaphenanthrene-10-xide, 10-decyloxy-9,10-dihydro-9-oxa-10-phosphaphenanthrene, etc. or mixtures thereof can be exemplified.

As the hindered phenol-based antioxidant, for example, triethylene glycol-bis[3-(3-t-butyl-5-methyl-4-hydroxyphenyl) propionate, 4,4'-butylidenebis(3-methyl-6-t-butylphenol), 1,6-hexanediol-bis[3-(3,5-di-t-butyl-4-hydroxyphenyl) propionate, 2,4-bis-(n-octylthio)-6-(4-hydroxy-3,5-di-t-butylanilino)-1,3,5-triazine, pentaerythrityl-tetrakis[3-(3,5-di-t-butyl-4-hydroxyphenyl) propionate], 2,2-Thio-diethylenebis[3-(3,5-di-t-butyl-4-hydroxyphenyl) propionate], octadecyl-3-(3,5-di-t-butyl-4-hydroxyphenyl) propionate, 2 , 2-thiobis(4-methyl-6-t-butylphenol), N, N'-hexamethylene bis(3,5-di-t-butyl-4-hydroxy-hydrocinnamamide), 3,5-di-t-butyl-4-hydroxy-benzylphosphonate-diethyl ester, 1,3,5-trimethyl-2,4,6-tris(3,5-di-butyl-4-hydroxybenzyl) benzene, bis(3,5-di-t-butyl-4-hydroxybenzylsulfonate) ethyl calcium, tris-(3,5-di-t-butyl-4-hydroxybenzyl)-isocyanurate, 2,6-di-t-butyl-p-cresol, butylated hydroxy anisole, 2,6-dit-butyl-4-ethylphenol, stearyl-β-(3,5-di-t-butyl-4-hydroxyphenyl) propionate, 2, 2'-methylenebis-(4-methyl-6-t-butylphenol), 2,2'-methylene-bis-(4-ethyl-6-t-butylphenol), 4,4'-thiobis-(3-methyl- 6-t-butylphenol), octylated diphenylamine, 2,4-bis[(octylthio) methyl]-o-cresol, isooctyl-3-(3,5-di-t-butyl-4-hydroxyphenyl) propionate, 4,4'-butylidenebis(3-methyl-6-t-butylphenol), 3,9-bis[1,1-dimethyl-2-[β-(3-t-butyl-4-hydroxy-5-methylphenyl) propionyl oxy] ethyl] 2,4,8,10-tetraoxaspyro [5,5] undecane, benzene propanoic acid, 3-(1,1-dimethylethyl)-4-hydroxy-5-methyl-2,4,8,10-tetraoxapyro [5.5] undecane-3,9-diylbis (2,2-dimethyl-2,1-ethanediyl) ester, 1,1,3-tris(2-methyl-4-hydroxy-5-t-butylphenyl) butane, 1,3,5-trimethyl-2,4,6-tris(3,5-di-t-butyl-4-hydroxybenzyl) benzene, bis[3,3'-bis-(4'-hydroxy-3'-t-butylphenyl) butyric acid] glycol ester, 1,3,5-tris(3', 5'-di-t-butyl-4'-hydroxybenzyl)-sec-triazine-2,4,6-(1H, 3H, 5H) trione, d-α-tocopherol, 3,9-bis(2-(3-(3-tertiarybutyl-4-hydroxy-5-methylphenyl) propionyl oxy)-1,1-dimethylethyl)-2,4,8,10-tetraoxaspyro [5.5] undecane and the like, or mixtures thereof can be exemplified.

As the amine-based antioxidant, for example, dimethyl succinate-1-(2-hydroxyethyl)-4-hydroxy-2,2,6,6-tetramethylpiperidine polycondensate, poly[{6-(1,1,3,3,-tetramethylbutyl) amino-1,3,5-triazine-2,4-diyl} {(2,2,6,6,-tetramethyl-4-piperidyl) imino} hexamethylene {(2,2,6,6-tetramethyl-4-piperidyl) imino}], 2-(3,5-dit-butyl-4-hydroxybenzyl)-2-n-butylmalonate bis(1,2,2,6,6-pentamethyl-4-piperidyl), tetrakis (2,2,6,6-tetramethyl-4-piperidyl) 1,2,3,4-butanetetracarboxylate, bis-2,2,6,6-tetramethyl-4-piperidyl-sebacate, bis(1,2,2,6,6-pentamethyl-4-piperidyl) sebacate, methyl (1,2,2,6,6-pentamethyl-4-piperidyl) sebacate, 1-[2-[3-(3.5-di-t-butyl-4-hydroxyphenyl) propionyl oxy] ethyl]-4-[3- (3,5-t-butyl-hydroxyphenyl) propionyl oxy] 2,2,6,6-tetramethyl piperidine, 4-benzoyloxy-2,2,6,6-tetramethyl piperidine and the like, or mixtures thereof can be exemplified.

As the sulfur-based antioxidant, for example, 4,4'-thiobis(6-t-butyl-3-methylphenol), dialkyl (C12-18) 3,3'-thiodipropionate, pentaerythrityl tetrakis(3-lauryl thiopropionate) and the like, or mixtures thereof can be exemplified.

Among the various antioxidants described above, sulfur-based antioxidants, hindered phenol-based antioxidants, or mixtures thereof are preferably used from the viewpoint of suppressing decomposition.

The content of the antioxidant is 1.0% by weight or more with respect to the total amount of the molding material (100% by weight). When the antioxidant is contained at 1.0% by weight or more, decomposition of components of the molding material during molding heating is suppressed, and burn marks hardly occur. The upper limit of the content of the antioxidant is preferably 2.0% by weight or less. When the content of the antioxidant is 2.0% by weight or less, burn marks due to decomposition of the antioxidant itself are suppressed, and the molded article appearance is improved.

Next, the molding material of the present invention will be explained.

The molding material of the present invention has a weight loss on heating, when being heated at 300°C for 10 minutes either in a nitrogen atmosphere or in an air atmosphere, of 1.5% or less. If the weight loss on heating under nitrogen atmosphere exceeds 1.5%, because the amount of gas generated when the resin of molding is melted increases, the temperature rise due to gas compression becomes remarkable when pressurizing in molding, and appearance defects due to burn marks are more likely to occur. 1.3% or less is more preferable, and 1.1% or less is further preferable. Further, if the weight loss on heating under air atmosphere exceeds 1.5%, because oxidative decomposition is likely to occur at the end portions and welded portions that are locally heated by the compression of gas at the time of pressurization in the molding process, appearance defects due to burn marks are likely to occur. 1.3% or less is more preferable, and 1.1% or less is further preferable. Furthermore, burn marks can be synergistically suppressed by reducing both weight losses on heating under nitrogen and air atmospheres.

In the present invention, the "weight loss on heating" represents a weight loss rate of the molded material after heating under the above-described heating conditions, in case where the weight of the molding material is referred to as 100%, and it can be determined by the following equation.

(Weight loss on heating) [weight%] = {(Weight before heating-Weight after heating) / Weight before heating} × 100

Further, it is particularly preferred that the molding material of the present invention has a moisture content of 0.02% or less. When the resin of the molding is melted, thermal decomposition and hydrolysis of the molding material components are likely to occur, and if the moisture content is 0.02% or less, particularly the hydrolysis of the flame retardant is suppressed, and the appearance defect due to the burn marks is suppressed, which is preferable. As this moisture content, 0.01% or less is more preferable. The moisture content contained in the molding material can be controlled by drying at a high temperature. The drying temperature is preferably from the glass transition temperature of the molding material to the glass transition temperature + 20°C. The drying time is preferably 4 hours or more. Further, the moisture content of the molding material can be measured by using the Karl Fischer method.

The molding material of the present invention preferably has a glass transition temperature of 100°C or lower. If it is 100°C or lower, the flowability at the molding temperature is improved, which is preferable. 90°C or lower is more preferable, and 80°C or lower is further preferable. The glass transition temperature can be determined by determining the molding material according to JIS K7121 with a differential scanning calorimeter (DSC) at a condition of a heating rate of 20 °C/min.

In the molding material of the present invention, it is preferred that a resin (E) is impregnated into the reinforcement fibers (particularly, into a reinforcement fiber bundle). Here, "the resin is impregnated into the reinforcement fibers" means a state particularly where the resin (E) is impregnated into the bundle of the reinforcement fibers (B).

The resin (E) is a resin having a melt viscosity lower than that of the amorphous thermoplastic resin (A). The resin (E) forms an impregnated reinforcement fiber bundle together with the reinforcement fibers (B), and it has a role as a so-called impregnation aid and dispersion aid that helps to impregnate the amorphous thermoplastic resin (A) into the reinforcement fibers (B) during molding and to disperse the reinforcement fibers (B) in the amorphous thermoplastic resin (A).

The melt viscosity of the resin (E) at 200°C is preferably 0.01 to 10 Pa·s. If the melt viscosity at 200°C is 0.01 Pa·s or more, the fracture starting from the resin (E) can be more suppressed, and the impact strength of the molded article can be more improved. The melt viscosity is more preferably 0.05 Pa·s or more, and further preferably 0.1 Pa s or more. On the other hand, if the melt viscosity at 200°C is 10 Pa·s or less, the resin (E) can be easily impregnated into the inside of the reinforcement fibers (B). Therefore, when molding the molding material, the dispersibility of the reinforcement fibers (B) can be more improved. The melt viscosity is more preferably 5 Pa·s or less, further preferably 2 Pa·s or less. Here, the melt viscosity of the resin (E) at 200°C can be measured by a viscoelasticity measuring instrument at 0.5 Hz using a 40 mm parallel plate.

As the resin (E), a resin having a high affinity with the amorphous thermoplastic resin (A) is preferred. By selecting a resin (E) having a high affinity with the amorphous thermoplastic resin (A), because it is efficiently compatible with the amorphous thermoplastic resin (A) at the time of producing or molding of the molding material, the dispersibility of the reinforcement fibers (B) can be more improved.

The resin (E) is appropriately selected according to the combination with the amorphous thermoplastic resin (A) which is a matrix resin. For example, if the molding temperature is in a range of 150 to 270°C, a terpene resin is preferably used, and if the molding temperature is in a range of 270 to 320°C, an epoxy resin is preferably used.

The resin (E) preferably has a carboxyl group, a hydroxyl group, or an epoxy group. By having these functional groups, because it interacts with the sizing agent on the surface of the reinforcement fiber and the amorphous thermoplastic resin (A), the adhesiveness is improved, and the mechanical properties of the molded article are improved. In order to improve the adhesiveness, a highly reactive epoxy resin is preferred.

Further, it is preferred that the weight loss on heating of the resin (E) at the molding temperature measured under the condition of 20 °C/min temperature rise (in air) is 5% by weight or less. If such a weight loss on heating is 5% by weight or less, the generation of decomposition gas during molding can be suppressed, and burn marks can be suppressed. More preferably, it is 3% by weight or less.

Where, the term "weight loss on heating" as used herein means that the weight of the resin (E) before heating is referred to as 100% and represents a weight loss rate of the resin (E) after heating under the above-described heating conditions, and it can be determined by the following equation.

$$\text{(Weight loss on heating) [weight\%]} = \{(\text{Weight before heating-Weight after heating}) / \text{Weight before heating}\} \times 100$$

Further, it is preferred that the molding material of the present invention has a structure where the impregnated reinforcement fiber (resin impregnated reinforcement fiber) is coated with the amorphous thermoplastic resin (A). Further, the "coated structure" means a structure where the amorphous thermoplastic resin (A) is arranged on the surface of the resin impregnated reinforcement fiber and it is adhered to the resin (E).

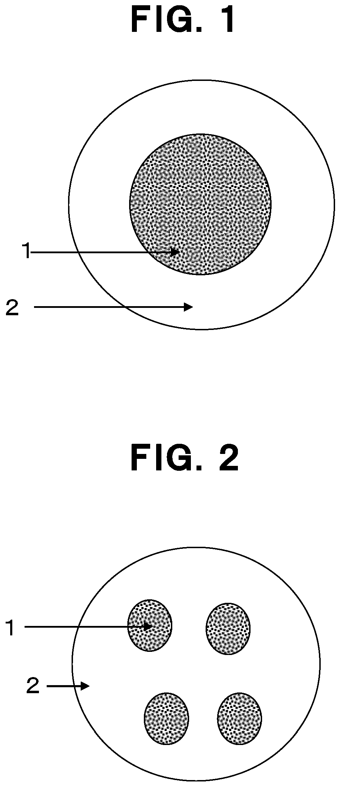

Figs. 1 and 2 schematically show examples of a cross-sectional form of the molding material of the present invention in the direction perpendicular to the axis (for example, the direction perpendicular to the pellet axis). Where, in the present invention, the direction perpendicular to the axis means a cross section in a plane orthogonal to the axial direction. As shown in Fig. 1, a configuration is preferred where a composite fiber bundle (1) having reinforcement fibers (B) and the resin (E) is structured as a core and therearound, the amorphous thermoplastic resin (A) (2) is coated to be arranged in a core-sheath structure. Further, as shown in Fig. 2, a plurality of composite fiber bundles (1) may be arranged so as to be coated with the amorphous thermoplastic resin (A) (2), and in this case, it is desired that the number of composite fiber bundles (1) is approximately 2 to 6.

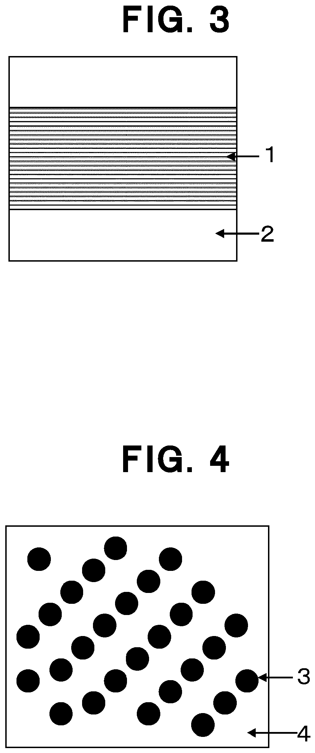

Fig. 3 is a schematic diagram showing a preferable example of a cross-sectional form of the molding material of the present invention in an axis parallel direction (for example, a direction parallel to the pellet axis). In the molding material of the present invention, as shown in Fig. 3, it is preferred that the reinforcement fibers (B) are arranged approximately in parallel to the axial direction of the molding material, and the length of the reinforcement fibers (B) is substantially the same length as the length of the molding material.

The term "arranged approximately in parallel" as used herein indicates a state where the axis line of the long axis of the reinforcement fiber (B) and the axis line of the long axis of the molding material are directed in the same direction, and the discrepancy in angle between both axis lines is preferably 20° or less, more preferably 10° or less, and further preferably 5° or less. Further, "substantially the same length" means that, for example, in a pellet-shaped molding material, the reinforcement fiber (B) is not cut in the middle of the inside of the pellet, or the reinforcement fiber (B) significantly shorter than the total length of the pellet is not substantially contained. In particular, although the amount of the reinforcement fibers (B) shorter than the total length of the pellet is not specified, in case where the content of the reinforcement fibers (B) having a length of 50% or less of the total length of the pellet is 30 parts by weight or less, it is evaluated that the reinforcement fibers (B), which are significantly shorter than the total length of the pellet, are not substantially contained. Further, the content of the reinforcement fibers (B) having a length of 50% or less of the total length of the pellet is preferably 20 parts by weight or less. Where, the total length of the pellet is a length in the pellet in the direction of orientation of the reinforcement fibers. Since the reinforcement fiber length in the molded article can be lengthened by the condition where the reinforcement fiber (B) has a length equivalent to that of the molding material, excellent mechanical properties can be obtained.

Further, it may be in a state where the boundary between the reinforcement fiber bundle and the amorphous thermoplastic resin (A) is adhered, and the amorphous thermoplastic resin (A) partially enters into a part of the composite near the boundary and is in a state of being melted at a condition compatible with the resin (E) constituting the composite, or in a state of being impregnated into the reinforcement fibers.

The molding material of the present invention is kneaded by, for example, injection molding to become a final molded article. From the viewpoint of handleability of the molding material, it is preferred that the reinforcement fiber bundle and the amorphous thermoplastic resin (A) remain adhered and do not separate from each other until the molding is performed, and maintain the shapes as described above. Otherwise, because the reinforcement fiber bundle and the amorphous thermoplastic resin (A) are completely different in shape (size, aspect ratio), specific gravity and weight, they are classified at the time of conveying and handling the material until molding and at the time of transferring the material in the molding process, the mechanical properties of the molded article when it is made into a molded article may vary, or the flowability of the molding material during the molding process may decrease, causing mold clogging or blocking in the molding process.

From such a point of view, the configuration arranged in the core-sheath structure as exemplified in Fig. 1 as described above is preferred. With such an arrangement, the amorphous thermoplastic resin (A) restrains the reinforcement fiber bundle, and a stronger compositing can be achieved.

The content of the resin (E) in the molding material of the present invention is preferably 0.1 part by weight or more and 20 parts by weight or less with respect to 100 parts by weight of the amorphous thermoplastic resin (A), more preferably 3 parts by weight or more and 10 parts by weight or less. Within such a range, the dispersibility of the reinforcement fibers (B) can be more improved when the molding material is molded. If the content of the impregnated resin is less than 0.1 part by weight, impregnation into the reinforcement fibers (B) becomes insufficient, and the dispersibility of the reinforcement fibers (B) is insufficient, which may deteriorate the mechanical properties, which is not preferred. On the other hand, if it exceeds 20 parts by weight, because the amount of the low-viscosity component in the molding material becomes relatively large, the physical properties of the matrix resin are deteriorated, and as a result, the mechanical properties of the molded article obtained by molding the molding material are reduced, which may not be preferable.

Next, the method for manufacturing the molding material of the present invention will be explained.

Here, as the molding material of the present invention, a molding material prepared by cutting a molding material, which is prepared by coating a fiber bundle, in which the resin (E) is impregnated into the reinforcement fibers (B), with (A) amorphous thermoplastic resin, into a length of 1 to 50 mm is preferred. By adjusting to this length, the flowability and handleability during molding can be sufficiently improved. As a particularly preferable embodiment of the molding material thus cut to an adequate length, a long fiber pellet for injection molding can be exemplified.

Here, the method for manufacturing the fiber bundle is a method comprising a step (I) of supplying the resin (E) to the reinforcement fibers (B) and bringing the resin (E) into contact with the reinforcement fibers (B) in a molten state at 100 to 300°C, and a step (II) of heating the reinforcement fibers (B) in contact with the resin (E) and impregnating the resin (E) into the reinforcement fibers (B).

The step (I) is not particularly limited, but a known method such as applying an oily agent, a sizing agent, or a matrix resin to the fiber bundle can be used, and among them, dipping or coating is preferable, and as a concrete coating, a reverse roll, a positive rotation roll, a kiss roll, spraying, and curtaining are preferably used.

Here, dipping means a method of supplying the resin (E) to a molten bath by a pump and feeding the reinforcement fiber (B) in the molten bath. By immersing the reinforcement fiber (B) in the molten bath of the resin (E), the resin (E) can be securely adhered to the reinforcement fiber (B). Further, the reverse roll, the positive rotation roll, and the kiss roll mean a method of supplying the melted resin (E) to a roll by a pump and applying the melted resin (E) to the reinforcement fiber (B). Further, the reverse roll means a method in which two rolls rotate in opposite directions to apply the melted resin (E) on the rolls, and the positive rotation roll means a method in which two rolls rotate in the same direction to apply the melted resin (E) on the rolls. Usually, in the reverse roll and the positive rotation roll, a method of sandwiching the reinforcement fiber (B), further installing a roll, thereby securely adhering the resin (E), is used. On the other hand, the kiss roll is a method of applying the resin (E) only by contacting the reinforcement fiber (B) and the roll. Therefore, it is preferred to use the kiss roll when the viscosity is relatively low, but regardless of which roll method is used, a predetermined amount of the resin (E) can be adhered to each unit length of the fiber bundle by applying a predetermined amount of the heat-melted resin (E), and running the reinforcement fiber (B) while contacting it. The spraying utilizes the principle of mist blowing, and is a method of atomizing the melted resin (E) and spraying it onto the reinforcement fiber (B). The curtaining is a method of naturally dropping the melted resin (E) from the small holes and applying or a method of overflowing it from a melting tank and applying. Since the amount required for coating can be easily adjusted, the loss of the resin (E) can be reduced.

Further, the melting temperature when supplying the resin (E) is preferably 100 to 300°C. The temperature is preferably 180 to 230°C for more stable adhesion. If the temperature is lower than 100°C, the viscosity of the resin (E) becomes high, and uneven adhesion may occur when the resin is supplied. Further, if the temperature exceeds 300°C, there is a possibility that the resin (E) may be thermally decomposed when manufactured over a long time. The resin (E) can be stably supplied by contacting it with the reinforcement fiber (B) in a melted state at 100 to 300°C.

Next, as the step (II), the reinforcement fiber in contact with the resin (E) obtained in the step (I) is heated to impregnate the resin (E) into the reinforcement fibers (B). Concretely, it is a step where with respect to the reinforcement fiber (B) in contact with the resin (E), at a temperature at which the resin (E) melts, the resin (E) is impregnated into the inside of the reinforcement fibers (B) by an operation such as applying a tension to them, repeating widening and bundling, or applying pressure and vibration. As a more concrete example, a method of passing a bundle of reinforcement fibers through a plurality of heated rolls or bars so as to contact with their surfaces, thereby widening it and the like, can be exemplified, and in particular, a method for impregnation using a squeezing die, a squeezing roll, a roll press or a double belt press is preferably used. Here, the squeezing die means a die in which the die diameter narrows toward the forwarding direction, and while bundling the reinforcement fiber bundle, the excess resin (E) is scraped off, and at the same time, the die promotes impregnation. Further, the squeezing roll means a roller that applies tension to the reinforcement fiber bundle with a roller to scrape off the excess resin (E) and at the same time promotes impregnation. Furthermore, the roll press is a device that continuously removes the air inside the reinforcement fiber bundle by a pressure between two rolls and at the same time promotes impregnation, and the double belt press is a device that presses the reinforcement fiber bundle via belts from above and below to promote impregnation.

Further, in the step (II), it is preferred that the resin (E) is impregnated into the reinforcement fibers (B).

Further, in the step (II), it is preferred that the maximum temperature of the resin (E) is 150 to 300°C. It is preferably 180 to 300°C, and more preferably 180 to 250°C. If it is lower than 150°C, the resin (E) cannot be sufficiently melted, and it may cause a reinforcement fiber bundle with insufficient impregnation, and if it is 400°C or higher, unfavorable side reactions such as a decomposition reaction of the resin (E) may occur.

Although the heating method in the step (II) is not particularly limited, concretely, a method using a heated chamber and a method of simultaneously heating and pressurizing using a hot roller can be exemplified.

Further, from the viewpoint of suppressing the occurrence of unfavorable side reactions such as cross-linking reaction or decomposition reaction of the resin (E), it is preferred to heat the resin in a non-oxidizing atmosphere. Here, the non-oxidizing atmosphere means an atmosphere that the oxygen concentration is 5% by volume or less, preferably 2% by volume or less, and more preferably an atmosphere containing no oxygen, that is, an atmosphere of an inert gas such as nitrogen, helium or argon, and among them, the nitrogen atmosphere is particularly preferable from the viewpoint of economy and ease of handling.

Further, the take-off speed of the composite fiber bundle directly affects the process speed, so the higher the speed is, the more preferable it is from the viewpoint of economy and productivity. Concretely, the take-off speed is preferably 10 to 100 m/min. It is more preferably 20 to 100 m/min, and further preferably 30 to 100 m/min. As the take-off method, a method of pulling out with a nip roller, a method of winding up with a drum winder, and a method of taking off a composite fiber bundle while directly cutting at a certain length with a strand cutter or the like, can be exemplified.

Furthermore, the molding material of the present invention is configured by adhering an amorphous thermoplastic resin (A) to the composite fiber bundle obtained as described above. The method of adhering the amorphous thermoplastic resin (A) to the composite fiber bundle is not particularly limited, but more concretely, method of continuously arranging the amorphous thermoplastic resin (A) around the composite fiber bundle so as to cover the composite fiber bundle using an extruder and a coating die for an electric wire coating method, or a method of arranging a melted film-like amorphous thermoplastic resin (A) using an extruder and a T-die from one side or both sides of the composite flattened by a roll or the like and integrating with a roll or the like, can be exemplified.

Fig. 4 schematically shows an example of the form of a composite fiber bundle (1) obtained in the present invention in the direction perpendicular to the axis. In Fig. 4, the black circle (3) indicates a single fiber of the reinforcement fiber (B), and the white portion (4) indicates the resin (E). The resin (E) (4) is filled between the single fibers (3). Namely, it shows a state where in the sea of the resin (E) (4), each single fiber (3) of the reinforcement fiber (B) is dispersed like an island.

Next, a method for manufacturing the fiber-reinforced resin molded article of the present invention (hereinafter, may be simply referred to as "molded article") will be explained.

A molded article can be obtained by molding the aforementioned molding material of the present invention. The molding method is not particularly limited, but can be applied a molding method excellent in productivity such as an injection molding, an autoclave molding, a press molding, a filament winding molding, and a stamping molding, and these can also be used in combination. Further, an integral molding such as an insert molding and an outsert molding can be easily performed. Furthermore, even after molding, it is possible to utilize a correction treatment by heating and an adhesive method excellent in productivity such as a heat welding, a vibration welding, and a ultrasonic welding.

Among these, a molding method using a mold is preferred, and in particular, by a molding method using an injection molding machine, a stable molded article can be obtained continuously. The conditions for injection molding are not particularly specified, but for example, conditions of an injection time: 0.5 second to 10 seconds, more preferably 2 seconds to 10 seconds, a back pressure: 0.1 MPa to 10 MPa, more preferably 2 MPa to 8 MPa, a holding pressure: 1 MPa to 50MPa, more preferably 1 MPa to 30MPa, a time of holding pressure: 1 second to 20 seconds, more preferably 5 seconds to 20 seconds, a cylinder temperature: 250°C to 320°C, a mold temperature: 20°C to 100°C are preferred. Here, the cylinder temperature indicates a temperature of a portion of the injection molding machine which heats and melt the molding material, and the mold temperature indicates a temperature of the mold for injecting the resin for forming a predetermined shape. By appropriately selecting these conditions, particularly the injection time, the back pressure and the mold temperature, the fiber length of the reinforcement fibers in the molded article can be easily adjusted. The cylinder temperature is preferably 250°C or higher. If the temperature is 250°C or higher, the flowability of the molding material increases in case of large-scale molding such as an automobile exterior member, the molding becomes possible in a short time, and the molding material reaches up to an end portion, which is preferable.

It is preferred that the method for manufacturing a molded article of the present invention passes through a step of drying the molding material before molding. The drying temperature is preferably a temperature in a range of the glass transition temperature to the glass transition temperature + 20°C. If the temperature is higher than the glass transition temperature, moisture is easily removed from the molecular chain and because the moisture content of the molding material is lowered and burn marks during molding can be suppressed, such a condition is preferable. Further, if the temperature is the glass transition temperature + 20°C or lower, heat fusion between the molding materials can be suppressed, which is preferable. The drying time is preferably 4 hours or more. If it is 4 hours or more, because the moisture content of the molding material is lowered and burn marks during molding can be suppressed, such a condition is preferable. Further, although there is no particular upper limit thereof, the moisture content may become constant after 24 hours or more, and the effect may be reduced. Thus, as the molding material of the present invention to be used for manufacturing a molded article, it is particularly preferred that the moisture content is 0.02% or less as aforementioned, whereby in particular burn marks at the time of molding can be suppressed.

As molded articles obtained by the above-described molding method, for example, can be exemplified are automotive parts, members and outer panels such as instrument panels, door beams, undercovers, lamp housings, pedal housings, radiator supports, spare tire covers, various modules such as front ends, cylinder head covers, bearing retainers, intake manifolds and pedals; aircraft-related parts, members and outer panels such as landing gear pods, winglets, spoilers, edges, rudders, fairings and ribs; tools such as monkeys and wrenches; and further, household and office electrical products and parts such as telephones, facsimiles, VTRs, copy machines, televisions, microwave ovens, audio equipment, toiletry goods, laser disks (registered trademark), refrigerators and air conditioners. Further, a member for electric/electronic devices such as a housing used for a personal computer, a mobile phone, etc. and a support member for supporting a keyboard inside the personal computer can also be exemplified. In the present invention, in case where a carbon fiber having a conductivity is used as the reinforcement fiber (B), because such a member for an electric/electronic device is provided with an electromagnetic wave shielding property, it is more preferable.

Further, the molded article of the present invention is suitably used particularly also as a large-sized automobile exterior molded article such as a charger cover, a battery AC adapter case, a condenser case, a power meter and a door part.

Examples

Hereinafter, Examples will be shown and the present invention will be explained in more detail, but the present invention is not limited to the description of these Examples. First, the evaluation methods of various properties used in the Example and the Comparative Example will be explained.

(1) Determination of weight loss on heating:
The weight loss on heating of the molding material or flame retardant under nitrogen or air was measured by thermogravimetric analysis (TGA). Using a platinum sample pan, the weight loss on heating was measured after elevating the temperature up to 300°C at a rate of 50 °C/min and holding for 10 minutes while flowing 20 ml/min of nitrogen or air into the measuring chamber. A TG/DTA7200 (supplied by Hitachi High-Tech Science Corporation) was used as a test machine.

(2) Determination of flexural strength of molded article:
With respect to an ISO type dumbbell test piece obtained in each Example and Comparative Example, the fulcrum distance was set to 64 mm using a 3-point bending test jig (indenter radius: 5 mm) in accordance with ISO 178, and the flexural strength was measured at a test condition of test speed of 2 mm/min. As the test machine, an "Instron (registered trademark)" universal test machine type 5566 (supplied by Instron Corporation) was used.

(3) Determination of Charpy impact strength of molded article:
A parallel portion of a type A1 multipurpose test piece described in JIS K7139, obtained by each Example and Comparative Example, was cut out, and using a C1-4-01 type test machine supplied by Tokyo Testing Machine Co., Ltd., a Charpy impact test with a V notch was carried out in accordance with ISO179, and the impact strength $(kJ/m^2)$ was calculated.

(4) Determination of moisture content of molding material:
The measurement was performed using a Karl Fischer measuring device (vaporizer: SE-24 type, electrolytic cell: AQ-6 type) supplied by Hiranuma Sangyo Co., Ltd. The sample was set at 3g, and the nitrogen used for moisture vaporization was set at 220°C and 200 ml/min.

(5) Glass transition temperature of molding material:

The glass transition temperature was measured by measuring 10 ± 2 mg of the molding material according to JIS K7121 at a temperature elevation rate of 20 °C/min by a differential scanning calorimeter (DSC).

(6) Evaluation of burn marks:

Since gas hardly outgases from the end portion of the dumbbell test piece, burn marks are likely to occur. Therefore, as a model evaluation of the molded article appearance, 20 dumbbell-type multipurpose test pieces of type A1 described in JIS K7139 were continuously molded, and among them, the proportion of the dumbbell pieces in each of which a discolored part of 2 mm or more was observed at the end portion was determined. The molding conditions were carried out by the methods described in each of Examples and Comparative Examples described later.

(7) Flame retardance:

A molded article (test piece) of 125 mm × 13 mm (0.5 mmt [thickness]) was molded, and the evaluation of flame retardance was performed in accordance with UL-94. Specifically, a burner flame was applied to the lower end of the above-described test piece supported vertically and held for 10 seconds, and then the burner flame was detached from the test piece. After the flame was extinguished, the burner flame was applied again, and the same operation was performed. Then, the determination was performed based on the flame combustion duration time after the end of the first flame contact, the total of the flame combustion duration time and the flameless combustion duration time of the second flame contact, and the presence or absence of the combustion fallen object. The standards for each grade in UL-94 are schematically as follows.

V-0: 1st and 2nd flame combustion duration times were within 10 seconds each, the total of 1st and 2nd flame combustion duration times of 5 test pieces was within 50 seconds, the total of the flame combustion time and the flameless combustion duration time of 2nd flame contact was within 30 seconds, and there was no combustion fallen object.

V-1: 1st and 2nd flame combustion duration times were more than 10 seconds and within 30 seconds each, the total of 1st and 2nd flame combustion duration times of 5 test pieces was within 250 seconds, the total of the flame combustion time and the flameless combustion duration time of 2nd flame contact was more than 30 seconds and within 60 seconds, and there was no combustion fallen object.

V-2: 1st and 2nd flame combustion duration times were more than 10 seconds and within 30 seconds each, the total of 1st and 2nd flame combustion duration times of 5 test pieces was within 250 seconds, the total of the flame combustion time and the flameless combustion duration time of 2nd flame contact was more than 30 seconds and within 60 seconds, and there was a combustion fallen object.

V-out: 1st flame combustion duration time was more than 30 seconds, or the total of the flame combustion time and the flameless combustion duration time of 2nd flame contact was more than 60 seconds.

(8) Flowability test:

Using a mold having a cavity extending in the longitudinal direction with a width of 13 mm and a thickness of 0.5 mm, injection molding was performed in the longitudinal direction of the mold cavity under the following conditions at a constant injection speed, and a test piece for evaluation having a length corresponding to the resulting flow distance, to which the injected resin could reach inside the cavity, was molded. The length up to the tip (longest part) of the test piece was measured, and the average of the lengths of the five test pieces was taken as the flow length. Since a molding material having a good flowability is filled in the mold in a short time, and the flow distance until it is cooled and solidified becomes long, the flowability is improved in the order of C, B and A described below.

A: Maximum length is 100 mm or more.
B: Maximum length is 80 mm or more and less than 100 mm.
C: Maximum length is 60 mm or more and less than 80 mm.

[Conditions for injection molding]

Cylinder temperature/mold temperature: 300°C/70°C

Injection speed: 30 mm/s

(9) Determination of mold shrinkage rate:

A molded article of 80 mm × 80 mm (2 mmt [thickness]) was molded, and the distance between the marked lines each in the resin flow direction (MD direction) of the resin test piece and in the direction perpendicular to the resin flow direction (TD direction) was measured. The shrinkage rate with respect to the distance between the marked lines stamped on the mold was measured. The measured value was taken as an average value of the shrinkage rates in the MD direction and the TD direction. The mold shrinkage rate becomes better in the order of D, C, B and A described below.

A: Less than 0.2%
B: 0.2% or more and less than 0.3%
C: 0.3% or more and less than 0.5%
D: 0.5% or more

[Conditions for molding]

Cylinder temperature/mold temperature: 300°C/70°C

Cooling time: 20s (cooling time by mold)

Holding pressure: half of injection peak pressure

Next, each component used in Examples and Comparative Examples will be explained.

(A) Amorphous thermoplastic resin:
(A-1) Aromatic polycarbonate resin "Panlite (registered trademark) L-1225L" having a carbonic acid ester structure of bisphenol A supplied by Teijin Chemicals Ltd. (viscosity average molecular weight: 19,500, glass transition temperature: 145°C) was used.
(B) Reinforcement fiber:

For (B-1) and (B-2), carbon fibers were produced by the production method of Reference Example 1 described later.
(B-1) Carbon fiber provided with glycerol polyglycidyl ether (aliphatic epoxy compound: epoxy group number: 3)
(B-2) Carbon fiber provided with bisphenol A type epoxy resin (aromatic epoxy compound: epoxy group number: 2, jER828 supplied by Japan Epoxy Resin Co., Ltd.)
(B-3) Glass fiber (jER2400 T-423N supplied by Nippon Electric Glass Co., Ltd.)

(C) Phosphorus flame retardant:

(C-1) Condensed phosphoric acid ester flame retardant "PX-200" supplied by Daihachi Chemical Industry Co., Ltd. (phosphorus concentration: 9%, weight loss on heating under air, 300°C, 10 minutes: 7%)
(C-2) Condensed phosphoric acid ester flame retardant "CR-741" supplied by Daihachi Chemical Industry Co., Ltd. (phosphorus concentration: 9%, weight loss on heating under air, 300°C, 10 minutes: 12%)
(C-3) Condensed phosphoric acid ester flame retardant "SR-3000" supplied by Daihachi Chemical Industry Co., Ltd. (phosphorus concentration: 7%, weight loss on heating under air, 300°C, 10 minutes: 3%)
(C-4) Melamine-melum polyphosphate, "PHOSMEL (registered trademark) 100" supplied by Nissan Chemical Industries, Ltd.

(D) Antioxidant:

(D-1) Hindered Phenol supplied BASF Japan Ltd. "Irganox (registered trademark) 1010"
(D-2) Thioether supplied by Adeka Corporation "Adeka stab (registered trademark) AO-412S"
(D-3) 1/1 mixture of (D-1) / (D-2)
(D-4) 2/1 mixture of (D-1) / (D-2)

(E) Resin:

(E-1) Bisphenol A type epoxy resin "jER1003" supplied by Mitsubishi Chemical Corporation (melt viscosity: 0.5 Pa · s, weight loss on heating: 2%)
(E-2) Bisphenol A type epoxy resin "jER1004AF" supplied by Mitsubishi Chemical Corporation (melt viscosity: 1 Pa · s, weight loss on heating: 1%)
(E-3) Hydrogenated terpene polymer "Clearon P125" (melt viscosity: 400 Pa · s, weight loss on heating: 18%) supplied by Yasuhara Chemical Co., Ltd. were used.

(Reference Example 1) Preparation of carbon fiber:

By spinning a copolymer containing polyacrylonitrile as a main component, calcining, and electrolytically oxidizing, continuous carbon fibers having a total number of single fibers of 24,000, a diameter of single fiber of 7 $\mu$m, a mass per unit length of 1.6 g/m, and a specific gravity of 1.8 g/cm$^3$ were obtained. The strand tensile strength of the continuous carbon fibers was 4,880 MPa, and the strand tensile modulus was 225 GPa. The surface oxygen ratio (O/C) was controlled by the current density in the electrolytic oxidation, and it was O/C = 0.10.

As a sizing agent, a sizing agent mother liquor in which an epoxy resin was dissolved in water or dispersed using a surfactant was prepared, and the sizing agent was applied to the above-described carbon fibers by an immersion method and dried at 220°C. The amount of the sizing agent provided was controlled to 1.0 part by weight with respect to 100 parts by weight of the carbon fibers by adjusting the concentration of the mother liquor.

(Reference Example 2) Preparation of resin-impregnated reinforcement fibers:

A liquid coating film obtained by heating and melting the resin (E) was formed on a roll heated to the coating temperature. A reverse roll was used to form a coating film with a constant thickness on the roll. The continuous reinforcement fibers (B) were passed on the roll while being in contact with it, and the resin (E) was adhered to them. Next, they were passed between five sets of roll presses each having a diameter of 50 mm in a chamber heated to the impregnation temperature. By this operation, the resin (E) was impregnated to the inside of the reinforcement fiber bundle to form resin-impregnated reinforcement fibers having a predetermined compounding amount.

(Reference Example 3) Preparation of resin composition:

Using a TEX-30$\alpha$ type twin-screw extruder supplied by JSW Corporation (screw diameter: 30 mm, die diameter: 5 mm, barrel temperature: 290°C, screw rotational speed: 150 rpm), a dry blend of (A) amorphous thermoplastic resin and (B) reinforcement fiber and/or (C) phosphorus-based flame retardant and/or (D) antioxidant was supplied from the main hopper, and while degassing from the downstream vacuum vent, the molten resin was discharged from the die hole, and after cooling the obtained strand, it was cut with a cutter to obtain melt-kneaded pellets of the resin composition.

Example 1:

(Step X) Using (A-1), (C-1) and (D-1) dry blended according to the formulation shown in Table 1, a resin composition was obtained according to Reference Example 3.

(Step Y) The resin-impregnated reinforcement fibers (B-1) were passed through the inside of the coating die for wire coating method installed at the tip of the TEX-30$\alpha$ twin-screw extruder (screw diameter: 30 mm, L/D = 32) of Japan Steel Works, Ltd., the above-described resin composition was discharged from the extruder into the die in a molten state, and the resin composition was continuously arranged so as to coat the periphery of the resin-impregnated reinforcement fibers. Here, in the step of coating the periphery of the resin-impregnated reinforcement fibers with the resin composition, the discharge amount of the above-described amorphous thermoplastic resin (A) was adjusted so that the compounding amount of the resin-impregnated reinforcement fibers in the resin molding material and the weight content of the reinforcement fibers in the molded article became the predetermined values shown in Table 1. The obtained continuous molding material was cooled and then cut with a cutter to obtain a 7 mm long fiber pellet-shaped molding material.

(Step Z) The obtained long fiber pellet-shaped molding material was dried with hot air at 80°C under a normal pressure for 4 hours, and then, using a SE75DUZ-C250 type injection molding machine supplied by Sumitomo Heavy Industries, Ltd., a test piece (molded article) for evaluation of properties was molded at an injection time: 10 seconds, a holding pressure: lower limit of molding pressure + 10 MPa, a time of holding pressure: 10 seconds, a cylinder temperature: 300°C, and a mold temperature: 70°C.

The obtained test piece was left in a constant temperature and constant humidity chamber adjusted to a temperature of 23°C and 50% RH for 24 hours, and then subjected to the test for evaluation of properties. Next, the obtained test piece (molded article) for evaluation of properties was evaluated according to the aforementioned evaluation methods. The evaluation results are summarized in Table 1.

Example 2:

(Step X) A resin composition was obtained in the same manner as in Example 1.

(Step Y) A molding material was obtained in the same manner as in Example 1.

(Step Z) A molded article was obtained in the same manner as in Example 1 other than conditions where the obtained long fiber pellet-shaped molding material was vacuum-dried at 80°C under reduced pressure for 24 hours The evaluation results are summarized in Table 1.

Comparative Example 1:

(Step X) A resin composition was obtained in the same manner as in Example 1 other than a condition where (D-1) was removed.

(Step Y) A molding material was obtained in the same manner as in Example 1.

(Step Z) A molded article was obtained in the same manner as in Example 1. The evaluation results are summarized in Table 1.

Comparative Example 2:

(Step X) A resin composition was obtained in the same manner as in Example 1.

(Step Y) A molding material was obtained in the same manner as in Example 1.

(Step Z) The long fiber pellet-shaped molding material obtained in Step Y was left in a constant temperature and constant humidity chamber adjusted to a temperature of 23°C and 50% RH for 24 hours, and then, using a SE75DUZ-C250 type injection molding machine supplied by Sumitomo Heavy Industries, Ltd., a test piece (molded article) for evaluation of properties was molded at an injection time: 10 seconds, a holding pressure: lower limit of molding pressure + 10 MPa, a time of holding pressure: 10 seconds, a cylinder temperature: 300°C, and a mold temperature: 80°C. The evaluation results are summarized in Table 1.

Comparative Example 3:

(Step X) A resin composition was obtained in the same manner as in Comparative Example 1.

(Step Y) A molding material was obtained in the same manner as in Example 1.

(Step Z) A molding material was obtained in the same manner as in Comparative Example 2. The evaluation results are summarized in Table 1.

Examples 3 to 9, 11 to 16, 18 to 20, Reference Example 10, Comparative Example 4, Comparative Examples 6 to 12:

(Step X) A resin composition was obtained in the same manner as in Example 1 other than conditions where the raw material compositions were changed to those shown in Tables 1 to 3.

(Step Y) A molding material was obtained by the same method as in Example 1 other than conditions where the raw material compositions were changed to those shown in Tables 1 to 3.

(Step Z) A molded article was obtained in the same manner as in Example 1.

The evaluation results are summarized in Tables 1 to 3.

Comparative Example 5:

(Step X) A resin composition was obtained in the same manner as in Example 1 other than a condition where the raw material composition was changed to that shown in Table 1.

(Step Y) When a molding material was tried to be obtained by adjusting (B-1) to 80 parts by weight with respect to 100 parts by weight of (A-1), because the coating of (A-1) to the resin-impregnated reinforcement fibers was insufficient, cutting defects occurred when cutting with the cutter, and a molding material could not be obtained.

On the other hand, in Comparative Examples 1 to 4 and 7 to 12, the weight loss on heating under nitrogen or air was large, and burn marks were recognized at the time of molding. In Comparative Example 5, the compounding amount of reinforcement fibers was large, and the mold was clogged during the molding process, so that the molding could not be performed. In Comparative Example 6, a phosphorus-based flame retardant was not used, and the flame retardance was insufficient.

Example 17:

(Step X) Using a dry blend of (A-1), (C-1) and (D-1) according to the formulation shown in Table 2 and the 3 mm chopped fibers of (B-1), a resin composition was obtained in accordance with Reference Example 3. At this time, the average fiber length of (B-1) contained in the resin composition was 0.3 mm.
(Step Y) This step was omitted.
(Step Z) Using the resin composition obtained in (Step X) as a molding material, it was dried with hot air at 80°C under normal pressure for 4 hours, and then, using a SE75DUZ-C250 type injection molding machine supplied by Sumitomo Heavy Industries, Ltd., a test piece (molded article) for evaluation of properties was molded at an injection time: 10 seconds, a holding pressure: lower limit of molding pressure + 10 MPa, a time of holding pressure: 10 seconds, a cylinder temperature: 300°C, and a mold temperature: 70°C.

The obtained test piece was left in a constant temperature and constant humidity chamber adjusted to a temperature of 23°C and 50% RH for 24 hours, and then subjected to the test for evaluation of properties. Next, the obtained test piece (molded article) for evaluation of properties was evaluated according to the aforementioned evaluation methods. The evaluation results are summarized in Table 2.

[Table 1]

| Raw material | | Unit | Example 1 | Example 2 | Comparative Example 1 | Comparative Example 2 | Comparative Example 3 | Example 3 | Example 4 | Example 5 | Example 6 | Example 7 | Comparative Example 4 | Comparative Example 5 |
|---|---|---|---|---|---|---|---|---|---|---|---|---|---|---|
| (A) Amorphous thermoplastic resin | Kind | - | A-1 | A-1 | A-1 | A-1 | A-1 | A-1 | A-1 | A-1 | A-1 | A-1 | A-1 | A-1 |
| (B) Reinforcement fiber | Kind | - | B-1 | B-1 | B-1 | B-1 | B-1 | B-1 | B-1 | B-1 | B-2 | B-3 | - | B-1 |
| | Compounding amount | parts by weight | 20.0 | 200 | 20.0 | 20.0 | 20.0 | 10.0 | 30.0 | 60.0 | 20.0 | 60.0 | - | 80.0 |
| (C) Flame retardant | Kind | - | C-1 | C-1 | C-1 | C-1 | C-1 | C-1 | C-1 | C-1 | C-1 | C-1 | C-1 | C-1 |
| | Compounding amount | parts by weight | 40.0 | 40.0 | 40.0 | 40.0 | 40.0 | 40.0 | 40.0 | 40.0 | 40.0 | 40.0 | 400 | 40.0 |
| (D) Antioxidant | Kind | - | D-1 | D-1 | - | D-1 | - | D-1 | D-1 | D-1 | D-1 | D-1 | D-1 | D-1 |
| | Compounding amount | % by weight | 1.5 | 1.5 | - | 1.5 | - | 1.5 | 1.5 | 1.5 | 1.5 | 1.5 | 1.5 | 1.5 |
| (E) Resin | Kind | - | E-1 | E-1 | E-1 | E-1 | E-1 | E-1 | E-1 | E-1 | E-1 | E-1 | E-1 | E-1 |
| | Compounding amount | parts by weight | 6.0 | 6.0 | 6.0 | 6.0 | 6.0 | 3.0 | 9.0 | 9.0 | 6.0 | 6.0 | 9.0 | 9.0 |

| | | | Unit | Example 1 | Example 2 | Comparative Example 1 | Comparative Example 2 | Comparative Example 3 | Example 3 | Example 4 | Example 5 | Example 6 | Example 7 | Comparative Example 4 | Comparative Example 5 |
|---|---|---|---|---|---|---|---|---|---|---|---|---|---|---|---|
| Molding material | Weight loss on heating | Under air | % by weight | 1.3 | 1.3 | 2.0 | 1.6 | 2.0 | 1.4 | 1.1 | 1.0 | 1.2 | 1.2 | 1.6 | Processing defect |
| | | Under nitrogen | % by weight | 1.3 | 1.1 | 1.4 | 1.6 | 1.6 | 1.2 | 1.0 | 0.9 | 1.3 | 1.2 | 1.0 | |
| | Moisture content | - | % by weight | 0.02 | 0.01 | 0.02 | 0.04 | 0.04 | 0.02 | 0.02 | 0.02 | 0.02 | 0.02 | 0.03 | |
| | Glass transition temperature | - | °C | 75 | 75 | 75 | 75 | 75 | 75 | 75 | 75 | 75 | 75 | 75 | |
| | Fiber length | - | mm | 7.0 | 7.0 | 7.0 | 7.0 | 7.0 | 7.0 | 7.0 | 7.0 | 7.0 | 7.0 | 7.0 | |
| Evaluation | Flame retardance | - | - | V-0 | V-0 | V-0 | V-0 | V-0 | V-0 | V-0 | V-0 | V-0 | V-0 | V-0 | |
| | Burn marks during molding | - | % | 5 | 0 | 45 | 40 | 60 | 5 | 0 | 0 | 5 | 0 | 40 | |
| | Flowability | - | mm | A | A | A | A | A | A | B | C | A | C | A | |
| | Mold shrinkage rate | - | % | A | A | A | A | A | B | A | A | A | C | D | |
| | Flexural strength | - | MPa | 230 | 230 | 230 | 220 | 220 | 180 | 250 | 255 | 220 | 200 | 60 | |
| | Impact strength | - | kJ/m$^2$ | 11 | 11 | 12 | 11 | 12 | 9 | 13 | 14 | 8 | 12 | 13 | |

EP 4 079 812 B1

## [Table 2] (Example 10 is a Reference Example)

| | | Unit | Example 8 | Example 9 | Example 10 | Example 11 | Example 12 | Comparative Example 6 | Comparative Example 7 | Example 13 | Example 14 | Example 15 | Example 16 | Example 17 | Comparative Example 8 | Comparative Example 9 | Comparative Example 10 |
|---|---|---|---|---|---|---|---|---|---|---|---|---|---|---|---|---|---|
| Raw material | (A) Amorphous thermoplastic resin | Kind | – | A-1 | A-1 | A-1 | A-1 | A-1 | A-1 | A-1 | A-1 | A-1 | A-1 | A-1 | A-1 | A-1 | A-1 | A-1 |
| | (B) Reinforcement fiber | Kind | - | B-1 | B-1 | B-1 | B-1 | B-1 | B-1 | B-1 | B-1 | B-1 | B-1 | B-1 | B-1 | B-1 | B-1 | B-1 |
| | | Compounding amount | parts by weight | 10.0 | 10.0 | 10.0 | 10.0 | 10.0 | 10.0 | 10.0 | 20.0 | 20.0 | 20.0 | 20.0 | 10.0 | 20.0 | 20.0 | 20.0 |
| | (C) Flame retardant | Kind | – | C-2 | C-3 | C-3 | C-1 | C-1 | C-4 | C-1 | C-1 | C-1 | C-1 | C-1 | C-1 | C-1 | C-1 | C-1 |
| | | Compounding amount | parts by weight | 40.0 | 40.0 | 40.0 | 20.0 | 80.0 | 40.0 | 120.0 | 40.0 | 40.0 | 40.0 | 40.0 | 40.0 | 40.0 | 40.0 | 40.0 |
| | (D) Antioxidant | Kind | – | D-1 | D-1 | - | D-1 | D-1 | D-1 | D-1 | D-1 | D-2 | D-3 | D-1 | D-1 | D-1 | D-1 | D-1 |
| | | Compounding amount | % by weight | 1.5 | 1.5 | - | 1.5 | 1.5 | 1.5 | 1.5 | 1.5 | 1.5 | 1.5 | 1.5 | 1.5 | 0.6 | 3.0 | 1.5 |
| | (E) Resin | Kind | - | E-1 | E-1 | E-1 | E-1 | E-1 | E-1 | E-1 | - | E-1 | E-1 | E-2 | - | E-1 | E-1 | E-3 |
| | | Compounding amount | parts by weight | 3.0 | 3.0 | 3.0 | 3.0 | 3.0 | 3.0 | 3.0 | - | 6.0 | 6.0 | 6.0 | - | 6.0 | 6.0 | 6.0 |
| Molding material | Weight loss on heating | Under air % by weight | 1.4 | 0.5 | 0.7 | 1.2 | 1.5 | 1.3 | 1.7 | 1.2 | 1.3 | 1.3 | 1.3 | 1.4 | 1.7 | 2.2 | 1.8 | |
| | | Under nitrogen % by weight | 1.2 | 0.5 | 0.5 | 1.2 | 1.5 | 1.0 | 1.5 | 1.2 | 1.3 | 1.3 | 1.3 | 1.2 | 1.4 | 1.4 | 1.6 | |
| | Moisture content | % by weight | 0.02 | 0.02 | 0.02 | 0.02 | 0.02 | 0.02 | 0.02 | 0.02 | 0.02 | 0.02 | 0.02 | 0.02 | 0.02 | 0.02 | 0.03 |
| | Glass transition temperature | °C | 75 | 90 | 90 | 120 | 60 | 145 | 60 | 75 | 75 | 75 | 75 | 75 | 75 | 75 | 78 |
| | Fiber length | mm | 7.0 | 7.0 | 7.0 | 7.0 | 7.0 | 7.0 | 7.0 | 7.0 | 7.0 | 7.0 | 7.0 | 0.3 | 7.0 | 7.0 | 7.0 |
| Evaluation | Flame retardance | - | V-0 | V-0 | V-0 | V-2 | V-0 | V-out | V-0 | V-0 | V-0 | V-0 | V-0 | V-0 | V-0 | V-0 | V-0 |
| | Burn marks during molding | % | 10 | 0 | 0 | 5 | 10 | 5 | 45 | 0 | 5 | 0 | 5 | 5 | 45 | 65 | 40 |
| | Flowability | mm | A | A | A | C | A | C | A | B | A | A | A | A | A | A | B |
| | Mold shrinkage rate | % | B | B | B | B | A | B | A | A | A | A | A | C | A | A | A |
| | Flexural strength | MPa | 180 | 180 | 180 | 170 | 150 | 170 | 140 | 200 | 220 | 220 | 220 | 140 | 220 | 210 | 190 |
| | Impact strength | kJ/m² | 9 | 10 | 10 | 9 | 12 | 9 | 13 | 7 | 12 | 11 | 11 | 6 | 11 | 10 | 8 |

[Table 3]

| | | | Unit | Example 18 | Example 19 | Example 20 | Comparative Example 11 | Comparative Example 12 |
|---|---|---|---|---|---|---|---|---|
| Raw material | (A) Amorphous thermoplastic resin | Kind | — | A-1 | A-1 | A-1 | A-1 | A-1 |
| | (B) Reinforcement fiber | Kind | - | B-1 | B-1 | B-1 | B-1 | B-1 |
| | | Compounding amount | parts by weight | 20.0 | 20.0 | 20.0 | 20.0 | 20.0 |
| | (C) Flame retardant | Kind | — | C-1 | C-1 | C-1 | C-1 | C-1 |
| | | Compounding amount | parts by weight | 40.0 | 40.0 | 40.0 | 40.0 | 40.0 |
| | (D) Antioxidant | Kind | — | D-3 | D-3 | D-4 | D-3 | D-3 |
| | | Compounding amount | % by weight | 1.0 | 1.8 | 1.5 | 0.6 | 2.5 |
| | (E) Resin | Kind | - | E-1 | E-1 | E-1 | E-1 | E-1 |
| | | Compounding amount | parts by weight | 6.0 | 6.0 | 6.0 | 6.0 | 6.0 |
| Molding material | Weight loss on heating | Under air | % by weight | 1.3 | 1.1 | 1.4 | 1.7 | 2.0 |
| | | Under nitrogen | % by weight | 1.3 | 1.0 | 1.4 | 1.5 | 1.5 |
| | Moisture content | | % by weight | 0.02 | 0.02 | 0.02 | 0.02 | 0.02 |
| | Glass transition temperature | | °C | 75 | 75 | 75 | 75 | 75 |
| | Fiber length | | mm | 7.0 | 7.0 | 7.0 | 7.0 | 7.0 |
| Evaluation | Flame retardance | | — | V-0 | V-0 | V-0 | V-0 | V-0 |
| | Burn marks during molding | | % | 5 | 0 | 10 | 40 | 50 |
| | Flowability | | mm | A | A | A | A | A |
| | Mold shrinkage rate | | % | A | A | A | A | A |
| | Flexural strength | | MPa | 230 | 230 | 210 | 210 | 200 |
| | Impact strength | | kJ/m$^2$ | 11 | 12 | 11 | 10 | 10 |

Since any of the molding materials of Examples 1 to 9 and 11 to 20 and Reference Example 10 contained the amorphous thermoplastic resin (A), and contained 4 to 60 parts by weight of the reinforcement fiber (B) and 20 to 60 parts by weight of the phosphorus-based flame retardant (C) with respect to 100 parts by weight of the amorphous thermoplastic resin (A), and the weight loss on heating when being heated at 300°C for 10 minutes either under nitrogen or under air was 1.5% or less, the molded article exhibited excellent flame retardance, molded article appearance, flowability, mold shrinkage rate and mechanical properties.

Industrial Applicability

The fiber-reinforced resin molding material of the present invention can be applied to the production of any molded article that requires excellent flame retardance, mechanical properties, appearance, etc.

Explanation of symbols

1: composite fiber bundle consisting of reinforcement fiber (B) and resin (E)
2: amorphous thermoplastic resin (A)
3: single fiber of reinforcement fiber (B)
4: resin (E)

**Claims**

1. A fiber-reinforced resin molding material which is a molding material containing at least the following components (A) to (C), **characterized in that** the fiber-reinforced resin molding material has a weight loss on heating, when being heated at 300°C for 10 minutes either in a nitrogen atmosphere or in an air atmosphere, of 1.5% or less, and an antioxidant (D) is added at 1.0% by weight or more.

   (A) an amorphous thermoplastic resin: 100 parts by weight
   (B) a reinforcement fiber: 4 to 60 parts by weight
   (C) a phosphorus-based flame retardant: 20 to 60 parts by weight

2. The fiber-reinforced resin molding material according to claim 1, wherein the antioxidant (D) is a mixture of a sulfur-based antioxidant and a hindered phenol-based antioxidant.

3. The fiber-reinforced resin molding material according to claim 1 or 2, wherein the antioxidant (D) is added at 2.0% by weight or less.

4. The fiber-reinforced resin molding material according to any one of claims 1 to 3, wherein a moisture content is 0.02% or less.

5. The fiber-reinforced resin molding material according to any one of claims 1 to 4, wherein a weight loss on heating of the phosphorus-based flame retardant (C), when being heated at 300°C for 10 minutes in an air atmosphere, is 5% or less.

6. The fiber-reinforced resin molding material according to any one of claims 1 to 5, wherein a glass transition temperature is 100°C or lower.

7. The fiber-reinforced resin molding material according to any one of claims 1 to 6, wherein the phosphorus-based flame retardant (C) is a condensed phosphate ester.

8. The fiber-reinforced resin molding material according to any one of claims 1 to 7, wherein the reinforcement fiber is a carbon fiber.

9. The fiber-reinforced resin molding material according to any one of claims 1 to 8, wherein a fiber length of the reinforcement fiber is 3 to 50 mm.

10. The fiber-reinforced resin molding material according to any one of claims 1 to 9, wherein the reinforcement fiber (B) is coated with the amorphous thermoplastic resin (A).

11. The fiber-reinforced resin molding material according to any one of claims 1 to 10, wherein the reinforcement fibers (B) are impregnated with a resin (E).

12. The fiber-reinforced resin molding material according to any one of claims 1 to 11, which is formed in a pellet shape.

13. A fiber-reinforced resin molded article prepared by using the fiber-reinforced resin molding material according to any one of claims 1 to 12.

14. A method for manufacturing a fiber-reinforced resin molded article using the fiber-reinforced resin molding material according to any one of claims 1 to 12, comprising a step of drying the fiber-reinforced resin molding material at a temperature in a range of a glass transition temperature of the fiber-reinforced resin molding material to the glass transition temperature + 20°C before molding.

**Patentansprüche**

1. Faserverstärktes Harzformmaterial, bei dem es sich um ein Formmaterial handelt, das zumindest die folgenden Komponenten (A) bis (C) enthält, **dadurch gekennzeichnet, dass** das faserverstärkte Harzformmaterial beim Erhitzen, wenn es entweder in einer Stickstoffatmosphäre oder in einer Luftatmosphäre 10 Minuten lang auf 300 °C erhitzt wird, einen Gewichtsverlust von 1,5 % oder weniger aufweist und dass ein Antioxidans (D) in einer Menge von 1,0 Gew.-% oder mehr zugegeben ist:

   (A) amorphes thermoplastisches Harz: 100 Gewichtsteile,
   (B) Verstärkungsfaser: 4 bis 60 Gewichtsteile,
   (C) Flammschutzmittel auf Phosphorbasis: 20 bis 60 Gewichtsteile.

2. Faserverstärktes Harzformmaterial nach Anspruch 1, wobei das Antioxidans (D) ein Gemisch aus einem Antioxidans auf Schwefelbasis und einem Antioxidans auf Basis eines sterisch gehinderten Phenols ist.

3. Faserverstärktes Harzformmaterial nach Anspruch 1 oder 2, wobei das Antioxidans (D) in einer Menge von 2,0 Gew.-% oder weniger zugesetzt ist.

4. Faserverstärktes Harzformmaterial nach einem der Ansprüche 1 bis 3, wobei der Feuchtigkeitsgehalt 0,02 % oder weniger beträgt.

5. Faserverstärktes Harzformmaterial nach einem der Ansprüche 1 bis 4, wobei der Gewichtsverlust des Flammschutzmittels auf Phosphorbasis (C) beim Erhitzen, wenn es in einer Luftatmosphäre 10 Minuten lang auf 300 °C erhitzt wird, 5 % oder weniger beträgt.

6. Faserverstärktes Harzformmaterial nach einem der Ansprüche 1 bis 5, wobei die Glastemperatur 100 °C oder weniger beträgt.

7. Faserverstärktes Harzformmaterial nach einem der Ansprüche 1 bis 6, wobei das Flammschutzmittel auf Phosphorbasis (C) ein kondensierter Phosphatester ist.

8. Faserverstärktes Harzformmaterial nach einem der Ansprüche 1 bis 7, wobei die Verstärkungsfaser eine Kohlefaser ist.

9. Faserverstärktes Harzformmaterial nach einem der Ansprüche 1 bis 8, wobei die Faserlänge der Verstärkungsfaser 3 bis 50 mm beträgt.

10. Faserverstärktes Harzformmaterial nach einem der Ansprüche 1 bis 9, wobei die Verstärkungsfaser (B) mit dem amorphen thermoplastischen Harz (A) beschichtet ist.

11. Faserverstärktes Harzformmaterial nach einem der Ansprüche 1 bis 10, wobei die Verstärkungsfasern (B) mit einem Harz (E) imprägniert sind.

12. Faserverstärktes Harzformmaterial nach einem der Ansprüche 1 bis 11, das zu einer Pelletform geformt ist.

13. Faserverstärkter Harzformmaterialgegenstand, der unter Verwendung eines faserverstärkten Harzformmaterials nach einem der Ansprüche 1 bis 12 hergestellt wurde.

14. Verfahren zur Herstellung eines faserverstärkten Harzformmaterialgegenstands unter Verwendung eines faserverstärkten Harzformmaterials nach einem der Ansprüche 1 bis 12, das den Schritt des Trocknens des faserverstärkten Harzformmaterials bei einer Temperatur im Bereich von der Glastemperatur des faserverstärkten Harzformmaterials bis zur Glastemperatur + 20 °C vor dem Formen umfasst.

**Revendications**

1. Matériau de moulage en résine renforcé par des fibres qui est un matériau de moulage contenant au moins les composants (A) à (C) suivants, **caractérisé en ce que** le matériau de moulage en résine renforcé par des fibres présente une perte de poids lors d'un chauffage, lorsqu'il est chauffé à 300°C pendant 10 minutes, soit dans une atmosphère d'azote, soit dans une atmosphère d'air, de 1,5 % ou moins, et un antioxydant (D) est ajouté à 1,0 % en poids ou plus.

    (A) une résine thermoplastique amorphe : 100 parties en poids
    (B) une fibre de renforcement : de 4 à 60 parties en poids
    (C) un ignifugeant à base de phosphore : de 20 à 60 parties en poids

2. Matériau de moulage en résine renforcé par des fibres selon la revendication 1, dans lequel l'antioxydant (D) est un mélange d'un antioxydant à base de soufre et d'un antioxydant à base de phénol encombré.

3. Matériau de moulage en résine renforcé par des fibres selon la revendication 1 ou 2, dans lequel l'antioxydant (D) est ajouté à raison de 2,0 % en poids ou moins.

4. Matériau de moulage en résine renforcé par des fibres selon l'une quelconque des revendications 1 à 3, dans lequel une teneur en humidité est de 0,02 % ou moins.

5. Matériau de moulage en résine renforcé par des fibres selon l'une quelconque des revendications 1 à 4, dans lequel une perte de poids lors d'un chauffage de l'ignifugeant à base de phosphore (C), lorsqu'il est chauffé à 300°C pendant 10 minutes dans une atmosphère d'air, est de 5 % ou moins.

6. Matériau de moulage en résine renforcé par des fibres selon l'une quelconque des revendications 1 à 5, dans lequel une température de transition vitreuse est de 100°C ou moins.

7. Matériau de moulage en résine renforcé par des fibres selon l'une quelconque des revendications 1 à 6, dans lequel l'ignifugeant à base de phosphore (C) est un ester de phosphate condensé.

8. Matériau de moulage en résine renforcé par des fibres selon l'un quelconques des revendications 1 à 7, dans lequel la fibre de renforcement est une fibre de carbone.

9. Matériau de moulage en résine renforcé par des fibres selon l'une quelconque des revendications 1 à 8, dans lequel une longueur de fibre de la fibre de renforcement est de 3 à 50 mm.

10. Matériau de moulage en résine renforcé par des fibres selon l'une quelconque des revendications 1 à 9, dans lequel la fibre de renforcement (B) est revêtue de la résine thermoplastique amorphe (A).

11. Matériau de moulage en résine renforcé par des fibres selon l'une quelconque des revendications 1 à 10, dans lequel les fibres de renforcement (B) sont imprégnées d'une résine (E).

12. Matériau de moulage en résine renforcé par des fibres selon l'une quelconque des revendications 1 à 11, qui est formé en forme de pastille.

13. Article moulé en résine renforcé par des fibres préparé en utilisant le matériau de moulage en résine renforcé par des fibres selon l'une quelconque des revendications 1 à 12.

14. Procédé de fabrication d'un article de moulé en résine renforcé par des fibres en utilisant le matériau de moulage en résine renforcé par des fibres selon l'une quelconque des revendications 1 à 12, comprenant une étape de séchage du matériau de moulage en résine renforcé par des fibres à une température dans une plage d'une température de transition vitreuse du matériau de moulage en résine renforcé par des fibres à la température de transition vitreuse + 20°C avant un moulage.

# FIG. 1

# FIG. 2

# FIG. 3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006307178 A
- JP 2008101035 A
- WO 2014148641 A
- JP 2013209629 A
- JP 2018059087 A
- JP 2013166922 A
- JP 2013011050 A
- JP 2017114107 A